# EUROPÄISCHE PATENTSCHRIFT

(11) **EP 2 345 209 B1**
(45) Veröffentlichungstag und Bekanntmachung des Hinweises auf die Patenterteilung: **22.07.2015**
(21) Anmeldenummer: 09752797.2
(22) Anmeldetag: 10.11.2009
(51) Int. Cl.: H04L 12/40

(54) **Verfahren und Vorrichtung zum Übertragen von Daten über Netzwerk-Knoten eines Netzwerkes**
Method and device for transferring data over network nodes of a network
Procédé et dispositif de transmission de données via les noeuds d'un réseau

(30) Priorität: 10.11.2008 DE 102008043622; 10.11.2008 US 112984 P; 11.02.2009 DE 102009000759; 11.02.2009 US 151624 P
(43) Veröffentlichungstag der Anmeldung: 20.07.2011
(73) Patentinhaber: Airbus Operations GmbH, 21129 Hamburg (DE)
(72) Erfinder: BERKHAHN, Sven-Olaf, 21220 Ohlendorf (DE); WIESE, Christian, 27404 Heeslingen (DE); WAGNER, Martin, 22761 Hamburg (DE); FISCHER, Wolfgang, 21635 Jork (DE)
(74) Vertreter: Isarpatent
(86) Internationale Anmeldenummer: PCT/EP2009/064899
(87) Internationale Veröffentlichungsnummer: WO 2010/052333

(56) Entgegenhaltungen:
- EP-A- 1 841 137
- WO-A-00/72156
- DE-A1-102006 004 191

## Beschreibung

Die vorliegende Erfindung betrifft ein Verfahren und eine Vorrichtung zum Übertragen von Daten über Netzwerk-Knoten eines bestimmten Netzwerkes.

Obwohl auf beliebige Bereiche anwendbar, wird die vorliegende Erfindung in Bezug mit einem Flugzeug oder mit einem Passagierflugzeug näher erläutert.

Das technische Gebiet der Erfindung betrifft die Übertragung von Daten über Netzwerk-Knoten eines bestimmten Netzwerkes in einem Flugzeug, insbesondere in einer Flugzeugkabine eines Flugzeuges.

Für die Übertragung von Daten, insbesondere von sicherheitsrelevanten Daten, wie die sicherheitsrelevanten Steuer- und Audio-Daten, zwischen einem zentralen Steuergerät und einer Mehrzahl in der Flugzeugkabine installierter Endgeräte wird in derzeitigen bestehenden Kabinen-Management-Systemen der Anmelderin, dem so genannten Cabin Intercommunication Data System (CIDS), ein spezieller, der Anmelderin intern bekannter Datenbus, der so genannte CIDS-Datenbus, eingesetzt.

Der derzeitige CIDS-Datenbus basiert auf der Übertragung von Ethernet-Rahmen oder Ethernet-Frames und hat eine Master- oder Bus-Steuervorrichtung, die im zentralen Steuergerät des Flugzeuges angeordnet ist, und eine Mehrzahl von Netzwerk-Knoten, so genannte Decoder-Encoder-Units (DEU), die als Client arbeiten können.

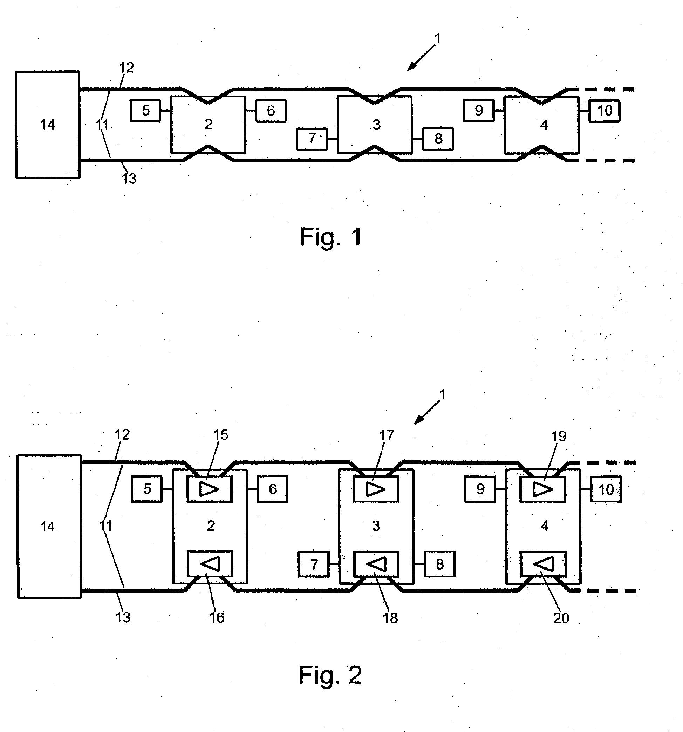

Dazu zeigt Fig. 1 ein schematisches Blockschaltbild eines Ausführungsbeispiels eines herkömmlichen Netzwerkes 1 zur Übertragung von Daten über Netzwerk-Knoten 2-4. Die Netzwerk-Knoten 2-4 sind mittels eines Busses 11 mit einer Bus-Steuer-Vorrichtung 14 gekoppelt. Dabei weist der Bus 11 eine Sendeleitung 12 und eine Empfangsleitung 13 auf. Die Sendeleitung 12 und auch die Empfangsleitung 13 sind durch die Netzwerk-Knoten 2-4 durchgeschleust. An jeden Netzwerk-Knoten 2-4 sind ein oder mehrere Endgeräte 5-10 gekoppelt. Dabei sind in dem Ausführungsbeispiel nach Fig. 1 nicht-sicherheitsrelevante die Endgeräte 5, 6 an dem Netzwerk-Knoten 2 gekoppelt. Dabei basiert der Bus 11 oder Datenbus auf dem physikalischen 10 MBit/s Ethernet-Layer. Der Kanalzugriff auf die Sendeleitung 12 und die Empfangsleitung 13 erfolgt durch ein statisch a-priori definiertes und deterministisches Zeitschlitzverfahren, das von der Bus-Steuervorrichtung 14 gesteuert wird. In den durch das Zeitschlitzverfahren definierten Zeitschlitzen werden die Daten für die an die Netzwerk-Knoten 2-4 gekoppelten Endgeräte 5-10 mittels Rahmen oder Daten-Rahmen (Frames)übertragen.

Neben den sicherheitsrelevanten Daten, wie beispielsweise sicherheitsrelevanten Steuerdaten, kann ein jeweiliger Rahmen auch nicht-sicherheitsrelevante Audio-Daten aufweisen, die als Broadcast an alle mit dem Bus 11 gekoppelten Netzwerk-Knoten 2-4 übertragen werden. Dabei ist der zeitliche Abstand zweier Zeitschlitze so festgelegt, dass er exakt einer Inversen der Abtastrate der Audio-Daten entspricht. Durch den Aufbau des CIDS-Datenbusses und des verwendeten statisch a-priori definierten und deterministischen Zeitschlitzverfahrens werden die sicherheitsrelevanten Daten mit hoher Synchronität und zeitlich deterministisch mit minimaler Latenzzeit an alle gekoppelten Endgeräte 5-10 übertragen. Dies ist erforderlich, um Hall-Effekte und Echo-Effekte bei der Wiedergabe der Audio-Daten über die zahlreichen Lautsprecher in der Flugzeugkabine zu vermeiden. Der Datenbus oder Bus 11 ist weiter hoch zuverlässig, da der Ausfall einzelner Netzwerkknoten 2-4 keine Auswirkung auf die Datenübertragung an die verbleibenden Netzwerk-Knoten hat, da die Datenleitungen, die Sendeleitung 12 und die Empfangsleitung 13 durch die Netzwerk-Knoten 2-4 durchgeschleift werden und nicht durch aktive Treiberbausteine durchgeführt werden. Allerdings ist es mit dem derzeitigen Datenbus nachteiligerweise nicht möglich, auch IP-Datenpakete über diesen CIDS-Datenbus zu übertragen.

Weiter wird in der Flugzeugkabine vermehrt der AFDX (Avionics Full DupleX)-Switched-Ethernet-Datenbus für die Übertragung der sicherheitsrelevanten Daten eingesetzt. Dieser Datenbus ist in der ARINC Norm 664 spezifiziert und nutzt das IP-Protokoll für die Datenübertragung.

Die AFDX-Netzwerktopologie besteht aus einem oder mehreren Switchen, an denen die Endgeräte angeschlossen sind. Die Datenübertragung zwischen zwei Endgeräten erfolgt dabei stets über zumindest einen dieser AFDX-Switche.

Durch diese spezifische, auf den AFDX-Switchen basierte Netzwerktopologie kommt es bei einer Ende-zu-Ende-Übertragung zwischen zwei Endgeräten nachteiligerweise zu unterschiedlichen Latenzzeiten und zu Jitter-Effekten, da die Daten in jedem Switch zumindest kurzzeitig zwischengespeichert werden müssen. Die Dauer der Zwischenspeicherung in den jeweiligen Netzwerk-Knoten hängt maßgeblich von der Auslastung des Netzwerkes ab und ist damit a priori nicht bekannt. Die Dauer der Zwischenspeicherung ist durch eine statische, a priori definierte Konfiguration der Datenströme begrenzt, so dass keine Daten verworfen werden und ein Quasi-Determinismus gewährleistet wird.

Wie oben bereits ausgeführt, erlaubt der derzeitige CIDS-Datenbus nachteiligerweise keine Übertragung von IP-Datenpaketen. Weiter ist der AFDX-Datenbus aufgrund der unterschiedlichen Latenzzeiten und der Jitter-Effekte bei der Datenübertragung zu den Endgeräten nicht für eine synchrone Übertragung der Audio-Daten zu allen Lautsprechern in der Kabine geeignet.

Die Druckschrift 2005/0065669 A1 beschreibt ein Flugzeug-Steuersystem zum Steuern der Übertragung von Daten über einen CAN-Bus und einen AFDX-Bus.

Die Druckschrift DE 10 2006 004 191 B4 beschreibt ein deterministisches Kommunikationssystem zum Austausch von Audio-Daten zwischen mehreren Teilnehmern. Bei diesem Kommunikationssystem werden Audio-Datensätze durch einen Teilnehmer über einen Datenbus in einer Audiosample-Zeit, welche einer Zeitspanne zwischen einem ersten Synchronisierungssignal und einem zweiten Synchronisierungssignal entspricht, während einer Nutzdatenphase übertragen.

Die Druckschrift US 7,009,996 B1 zeigt ein Verfahren und ein System zum periodischen und nichtperiodischen Übertragen von Daten über einen Datenbus eines Flugzeuges.

Weiterhin zeigt die Druckschrift US 4,907,222 A ein Multiplexsystem für ein Fahrzeug.

Ferner beschreibt die Druckschrift US 4,663,499 A ein Verfahren zum Übertragen von Nachrichten zwischen einer zentralen Station und verschiedenen entfernten Stationen.

Die Druckschrift WO 00/72156 beschreibt ein Verfahren und ein System zum periodischen und nichtperiodischen Übertragung von Daten über einen Datenbus eines Flugzeugs.

Demnach ist es eine Aufgabe der vorliegenden Erfindung, die Übertragung von sicherheitsrelevanten Daten, wie CIDS-Datenrahmen, und nicht-sicherheitsrelevanten Daten, wie IP-Paketen, über einen gemeinsamen Datenbus in einem Flugzeug zu verbessern.

Erfingdungsgemäß wird diese Aufgabe durch ein Verfahren zum Übertragen von Daten über Netzwerk-Knoten eines bestimmten Netzwerkes mit den Merkmalen des Patentanspruchs 1 und durch eine Vorrichtung zum Übertragen von Daten über Netzwerk-Knoten eines bestimmten Netzwerkes mit den Merkmalen des Patentanspruchs 17 gelöst.

Demgemäß wird ein Verfahren zum Übertragen von Daten über Netzwerk-Knoten eines bestimmten Netzwerkes vorgeschlagen, welches folgende Schritte aufweist:
- Koppeln der Netzwerk-Knoten mit einer jeweiligen Anzahl gekoppelter Endgeräte mittels eines Busses mit einer Sendeleitung und einer Empfangsleitung in einer Verkettungs-Anordnung;
- Bereitstellen einer ersten Anzahl von gemäß dem bestimmten Netzwerk definierten ersten Rahmen, welche jeweils sicherheitsrelevante Daten aufweisen;
- Bereitstellen einer zweiten Anzahl von gemäß dem bestimmten Netzwerk definierten zweiten Rahmen, welche jeweils nichtsicherheitsrelevante Daten aufweisen; und
- Übertragen der bereitgestellten ersten Rahmen und der bereitgestellten zweiten Rahmen über den Bus in einer vörbestimmten Abfolge, wobei ein jeweiliger zeitlicher Abstand von zwei jeweiligen über die Sendeleitung und von zwei jeweiligen über die Empfangsleitung übertragenen ersten Rahmen in Abhängigkeit einer bestimmten Abtastrate von Audio-Daten durch die gekoppelten Endgeräte eingestellt ist und innerhalb des jeweiligen zeitlichen Abstandes zumindest ein jeweiliger zweiter Rahmen über die Sendeleitung und über die Empfangsleitung übertragen wird.

Ferner wird eine Vorrichtung zum Übertragen von Daten über Netzwerk-Knoten eines bestimmten Netzwerkes vorgeschlagen, welche aufweist:
- zumindest zwei Netzwerk-Knoten mit einer jeweiligen Anzahl gekoppelter Endgeräte;
- einen Bus mit einer Sendeleitung und einer Empfangsleitung, welcher die Netzwerk-Knoten in einer Verkettungs-Anordnung koppelt;
- eine mit dem Bus gekoppelten Bus-Steuervorrichtung, welche dazu eingerichtet ist, gemäß dem bestimmten Netzwerk definierte erste Rahmen mit sicherheitsrelevanten Daten und zweiten Rahmen mit nicht-sicherheitsrelevanten Daten in einer vorbestimmten Abfolge über den Bus zu übertragen, wobei ein jeweiliger zeitlicher Abstand von zwei jeweiligen über die Sendeleitung und von zwei jeweiligen über die Empfangsleitung übertragenen ersten Rahmen in Abhängigkeit einer bestimmten Abtastrate von Audio-Daten durch die gekoppelten Endgeräte eingestellt ist und innerhalb des jeweiligen zeitlichen Abstandes zumindest ein jeweiliger zweiter Rahmen über die Sendeleitung und über die Empfangsleitung übertragen wird.

Des Weiteren wird ein Flugzeug mit einer wie oben beschriebenen Vorrichtung zum Übertragen von Daten über Netzwerk-Knoten eines bestimmten Netzwerkes vorgeschlagen.

Ein Vorteil der vorliegenden Erfindung liegt darin, dass eine gemeinsame Übertragung von sicherheitsrelevanten Daten mit fest definiertem Zeitabstand bei minimaler Latenz und bei minimalem Jitter und von nicht-sicherheitsrelevanten Daten, wie beispielsweise IP-Datenpaketen, bereitgestellt werden kann. Dabei werden die zweiten Rahmen mit den nicht-sicherheitsrelevanten IP-Datenpakete insbesondere im Best-Effort-Verfahren oder -Modus übertragen. Weiter ist die Echtzeit-Fähigkeit der Übertragung der ersten Rahmen mit den sicherheitsrelevanten Daten ist durch den Einsatz eines Zeitschlitzverfahrens sichergestellt.

Durch die Übertragung der ersten Rahmen mit den sicherheitsrelevanten Daten und der zweiten Rahmen mit den nicht-sicherheitsrelevanten Daten über einen gemeinsamen, hybriden Datenbus entfällt die Notwendigkeit, einen zu dem herkömmlichen CIDS-Datenbus parallelen Datenbus für die Übertragung der IP-Pakete zu implementieren. Dadurch können Gewicht, Kosten und der Gesamtaufwand für das Netzwerk des Flugzeugs eingespart werden. Weiter können die Kosten für kundenspezifische Anpassungen reduziert werden, da nur ein einziges Netzwerk, und nicht wie bisher zwei Netzwerke, konfiguriert werden muss.

Das Netzwerk ist vorzugsweise als ein Ethernet-Netzwerk, insbesondere als 100 MBit/s Ethernet-Netzwerk ausgebildet.

In den Unteransprüchen finden sich vorteilhafte Ausgestaltungen und Verbesserungen der Erfindung.

Gemäß einer bevorzugten Weiterbildung wird der jeweilige zeitliche Abstand als ein Zeitschlitz ausgebildet, welcher einer Inversen der Abtastrate der Audio-Daten durch die gekoppelten Endgeräte entspricht.

Der erste Rahmen kann neben den sicherheitsrelevanten Daten auch Audio-Daten umfassen, die als Broadcast an alle Netzwerk-Knoten übertragen werden. In einem solchen Fall kann der jeweilige Zeitschlitz des Zeitschlitzverfahrens derart eingestellt werden, dass er einer Inversen der Abtastrate der Audio-Daten durch die Endgeräte entspricht.

Weiterhin wird eine Vorrichtung zum Übertragen von Daten und Energie über Netzwerk-Knoten eines bestimmten Netzwerkes vorgeschlagen, welche aufweist:
- zumindest zwei Netzwerk-Knoten mit einer jeweiligen Anzahl gekoppelter Endgeräte;
- einen Bus mit einer Sendeleitung und einer Empfangsleitung, welcher die Netzwerk-Knoten in einer Verkettungs-Anordnung koppelt;
- eine mit dem Bus gekoppelte Bus-Steuervorrichtung, welche aufweist:
   ein erstes Mittel, welches dazu eingerichtet ist, eine Übertragung von gemäß dem bestimmten Netzwerk definierten ersten Rahmen mit sicherheitsrelevanten Daten und zweiten Rahmen mit nicht-sicherheitsrelevanten Daten in einer vorbestimmten Abfolge als Daten-Spannungssignale über den Bus zu steuern, dabei einen jeweiligen zeitlichen Abstand von zwei jeweiligen über die Sendeleitung und von zwei jeweiligen über die Empfangsleitung übertragen ersten Rahmen in Abhängigkeit einer bestimmten Abtastrate der Audio-Daten durch die gekoppelten Endgeräte einzustellen und eine Übertragung zumindest eines jeweiligen zweiten Rahmens über die Sendeleitung und über die Empfangsleitung innerhalb des jeweiligen zeitlichen Abstand zu steuern, und
   ein zweites Mittel, welches dazu eingerichtet ist, die Daten-Spannungssignale zumindest auf der Sendeleitung oder auf der Empfangsleitung mit zur Spannungsversorgung zumindest eines Netzwerk-Knotens geeigneten Versorgungs-Spannungssignalen zu beaufschlagen.

Gemäß einer weiteren bevorzugten Weiterbildung umfasst der jeweilige Zeitschlitz einen ersten Teil-Zeitschlitz zur Übertragung genau eines ersten Rahmens und einen zweiten Teil-Zeitschlitz zur Übertragung zumindest eines zweiten Rahmens.

Die Summe aus dem ersten Teil-Zeitschlitz und dem zweiten Teil-Zeitschlitz ist kleiner als der Zeitschlitz und damit kleiner als der zeitliche Abstand von zwei jeweiligen über die Sendeleitung und von zwei jeweiligen über die Empfangsleitung übertragenen ersten Rahmen.

Gemäß einer weiteren bevorzugten Weiterbildung werden eine Bus-Steuervorrichtung und die Netzwerk-Knoten mittels des Busses in der Verkettungs-Anordnung gekoppelt, wobei die Netzwerk-Knoten mittels der Sendeleitung des Busses und mittels der Empfangsleitung des Busses mit der Bus-Steuervorrichtung gekoppelt sind, wobei die Sendeleitung und die Empfangsleitung insbesondere durch den jeweiligen Netzwerk-Knoten durchgeschleift werden.

Gemäß einer weiteren bevorzugten Weiterbildung werden die jeweiligen ersten Rahmen in den jeweiligen ersten Teil-Zeitschlitz mittels eines statischen und deterministischen Zeitschlitzverfahrens über die Sendeleitung und die Empfangsleitung des Busses übertragen.

Gemäß einer weiteren bevorzugten Weiterbildung werden die mittels der Netzwerk-Knoten gekoppelten Endgeräte mittels des statischen und deterministischen Zeitschlitzverfahrens derart gesteuert, dass innerhalb des jeweiligen vorbestimmten Zeitschlitzes eines Zyklus mit einer bestimmten Anzahl von Zeitschlitzen genau ein bestimmtes Endgerät einen ersten Rahmen über die Sendeleitung empfangen kann und genau einen ersten Rahmen über die Empfangsleitung senden kann.

Vorzugsweise entspricht die Anzahl der Zeitschlitze eines Zyklus der Anzahl der mit dem Bus gekoppelter Endgeräte, so dass in jedem Zyklus an jedes Endgerät genau ein erster Rahmen über die Sendeleitung übertragen werden kann und ferner das jeweilige Endgerät genau einen ersten Rahmen über die Empfangsleitung senden kann.

Gemäß einer weiteren bevorzugten Weiterbildung werden die zweiten Rahmen mittels eines Best-Effort-Verfahrens übertragen werden.

Vorteilhafterweise wird durch den Einsatz des Best-Effort-Verfahrens für die Übertragung der zweiten Rahmen die Gesamt-Datenübertragungsrate des Busses maximiert.

Gemäß einer weiteren bevorzugten Weiterbildung werden die mittels des Busses gekoppelten Netzwerk-Knoten mittels des Zeitschlitzverfahrens derart gesteuert, dass innerhalb eines jeweiligen vorbestimmten Zeitschlitzes genau ein bestimmter Netzwerk-Knoten genau einen ersten Rahmen für ein gekoppeltes Endgerät und zumindest einen zweiten Rahmen über die Sendeleitung empfangen kann und genau einen ersten Rahmen eines gekoppelten Endgerätes und zumindest einen zweiten Rahmen über die Empfangsleitung senden kann.

Gemäß einer weiteren bevorzugten Weiterbildung werden die ersten Rahmen und die zweiten Rahmen als Ethernet-Rahmen ausgebildet, wobei das bestimmte Netzwerk vorzugsweise als Ethernet-Netzwerk ausgebildet wird.

Gemäß einer weiteren bevorzugten Weiterbildung wird ein jeweiliger erster Rahmen ausgebildet aus:
- einem erstes Feld mit einer Ethernet-Präambel;
- einem zweites Feld mit Audio-Daten, insbesondere mit Audio-Broadcast-Daten;
- einem drittes Feld mit einer Adresse, welche zumindest das jeweilige Endgerät des jeweiligen Netzwerk-Knotens angibt;
- einem viertes Feld mit den sicherheitsrelevanten Daten; und
- einem fünftes Feld mit einer Ethernet-Prüfsumme.

Gemäß einer weiteren bevorzugten Weiterbildung wird die Adresse des dritten Feldes des ersten Rahmens als ein Adress-Tupel ausgebildet, wobei ein erstes Glied des Adress-Tupels den jeweiligen Netzwerk-Knoten adressiert und ein zweites Glied des Adress-Tupels das jeweilige Endgerät des jeweiligen Netzwerk-Knotens adressiert.

Gemäß einer weiteren bevorzugten Weiterbildung wird ein jeweiliger zweiter Rahmen ausgebildet aus:
- einem erstes Feld mit einer Ethernet-Präambel;
- einem zweites Feld mit einer Adresse, welche zumindest einen jeweiligen Netzwerk-Knoten angibt;
- einem drittes Feld mit einem IP-Datenpaket; und
- einem viertes Feld mit einer Ethernet-Prüfsumme.

Gemäß einer weiteren bevorzugten Weiterbildung überträgt die Bus-Steuervorrichtung innerhalb eines Zyklus mit der Anzahl N2 von Zeitschlitzen jeweils zumindest einen ersten Rahmen an das jeweilige, mittels des zweiten Gliedes des Adress-Tupels des vierten Feldes des ersten Rahmens adressierte Endgerät über die Sendeleitung in einem jeweiligen Zeitschlitz des Zyklus.

Gemäß einer weiteren bevorzugten Weiterbildung wird derjenige Netzwerk-Knoten in dem jeweiligen Zeitschlitz des Zyklus berechtigt, nach dem Senden des jeweiligen ersten Rahmens des durch das zweite Glied des Adress-Tupels des in dem jeweiligen Zeitschlitz empfangenen ersten Rahmens adressierten Endgerätes einen oder mehrere zweite Rahmen mittels des Best-Effort-Verfahrens über die Empfangsleitung zu senden.

Gemäß einer weiteren bevorzugten Weiterbildung überträgt die Bus-Steuervorrichtung die jeweiligen zweiten Rahmen in einem Broadcast-Modus über den Bus, wobei die gekoppelten Netzwerk-Knoten jeweils die zweiten Rahmen empfangen, das IP-Paket des zweiten Rahmens extrahieren und das IP-Paket an das jeweilige, durch eine IP-Adresse des IP-Paketes adressierte Endgerät weiterleiten, falls das adressierte Endgerät mit dem jeweiligen Netzwerk-Knoten gekoppelt ist.

Gemäß einer weiteren bevorzugten Weiterbildung wird die Berechtigung des jeweiligen Netzwerk-Knotens zum Senden der zweiten Rahmen über die Empfangsleitung innerhalb des jeweiligen Zyklus mittels einer Einstellung einer Anzahl an diesen jeweiligen Netzwerk-Knoten zu übertragen den ersten Rahmen eingestellt.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: ein schematisches Blockschaltbild eines Ausführungsbeispiels einer herkömmlichen Vorrichtung zum Übertragen von Daten über Netzwerk-Knoten eines bestimmten Netzwerkes;
- Fig. 2: ein schematisches Blockschaltbild eines Ausführungsbeispiels einer Vorrichtung zum Übertragen von Daten über Netzwerk-Knoten eines bestimmten Netzwerkes gemäß der Erfindung;
- Fig. 3: ein schematisches Ablaufdiagramm eines Ausführungsbeispiels eines Verfahrens zum Übertragen von Daten über Netzwerk-Knoten eines bestimmten Netzwerkes gemäß der Erfindung;
- Fig. 4: ein schematisches Blockschaltbild eines Ausführungsbeispiels eines ersten Rahmens gemäß der Erfindung;
- Fig. 5: ein schematisches Blockschaltbild eines Ausführungsbeispiels eines zweiten Rahmens gemäß der Erfindung;
- Fig. 6: ein schematisches Blockschaltbild eines Ausführungsbeispiels eines Adress-Tupels des ersten Rahmens gemäß Fig. 4; und
- Fig. 7: ein schematisches Blockschaltbild eines Ausführungsbeispiels eines zeitlichen Ablaufs der Übertragung der ersten und zweiten Rahmen über den erfindungsgemäßen Bus.

In den Figuren bezeichnen dieselben Bezugszeichen gleiche oder funktionsgleiche Komponenten, soweit nichts Gegenteiliges angegeben ist.

In Fig. 2 ist ein schematisches Blockschaltbild eines Ausführungsbeispiels einer erfindungsgemäßen Vorrichtung zum Übertragen von Daten R1, R2 über Netzwerk-Knoten 2-4 eines bestimmten Netzwerkes 1 dargestellt.

Die Netzwerk-Knoten 2-4 sind mit einer jeweiligen Anzahl von Endgeräten 5-10 gekoppelt. Ohne Einschränkung der Allgemeinheit sind im Ausführungsbeispiel nach Fig. 2 die jeweiligen Netzwerk-Knoten 2-4 mit jeweils zwei Endgeräten 5-10 gekoppelt. Beispielsweise ist der Netzwerk-Knoten 2 mit den Endgeräten 5 und 6 gekoppelt. Der Bus 11 zur Koppelung der Netzwerk-Knoten 2-4 mit einer Bus-Steuervorrichtung 14 hat eine Sendeleitung 12 und eine Empfangsleitung 13. Der Bus 11 koppelt die Netzwerkknoten 2-4 in einer Verkettungs-Anordnung (Daisy-Chain). Die Sendeleitung 12 und die Empfangsleitung 13 sind vorzugsweise durch die Netzwerk-Knoten 2-4 durchgeschleift. Zur Verstärkung der Signale auf der Sendeleitung 12 und der Empfangsleitung 13 hat der jeweilige Netzwerk-Knoten 2-4 vorzugsweise jeweils eine Verstärkungseinrichtung 15-20.

Die Bus-Steuervorrichtung 14 ist insbesondere in der zentralen Steuervorrichtung des Flugzeuges integriert. Weiter ist die Bus-Steuervorrichtung dazu eingerichtet, gemäß dem bestimmten Netzwerk 1, beispielsweise dem Ethernet-Netzwerk, definierte erste Rahmen R1, beispielsweise CIDS-Rahemn, mit sicherheitsrelevanten Daten D1 und zweite Rahmen R2 mit nicht-sicherheitsrelevanten Daten D2, beispielsweise IP-Datenpakete oder TCP/IP-Datenpakete, in einer vorbestimmten Abfolge über den Bus 11 zu übertragen. Die vorbestimmte Abfolge der ersten Rahmen R1 und der zweiten Rahmen R2 kann beispielsweise eine alternierende Abfolge sein.

Der jeweilige zeitliche Abstand ZS1-ZS3 von zwei jeweiligen über die Sendeleitung 12 und von zwei jeweiligen über die Empfangsleitung 13 übertragenen ersten Rahmen R1 ist in Abhängigkeit einer bestimmten Abtastrate der Audio-Daten durch die gekoppelten Endgeräte 5-10 eingestellt. Innerhalb des jeweiligen zeitlichen Abstandes ZS1-ZS3 wird zusätzlich zu einem jeweiligen ersten Rahmen R1 zumindest ein jeweiliger zweiter Rahmen R2 über die Sendeleitung 12 und über die Empfangsleitung 13 übertragen.

Vorzugsweise sind auch die Netzwerk-Knoten 2-4 zu einer solchen Übertragung eingerichtet.

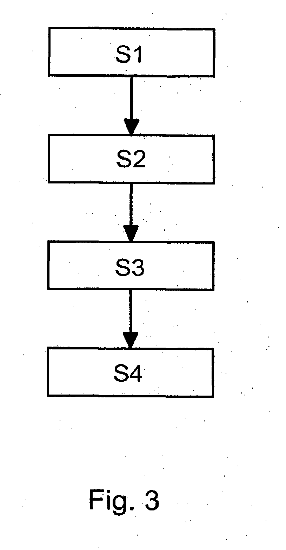

In Fig. 3 ist ein schematisches Ablaufdiagramm eines Ausführungsbeispiels eines Verfahrens zum Übertragen von Daten R1-R2 über Netzwerkknoten 2-4 eines bestimmten Netzwerkes 1, beispielsweise das Ethernet-Netzwerk, dargestellt.

Nachfolgend wird das erfindungsgemäße Verfahren anhand des Blockschaltbildes in Fig. 3 mit Bezug auf die Fig. 2 und 4 bis 7 erläutert.

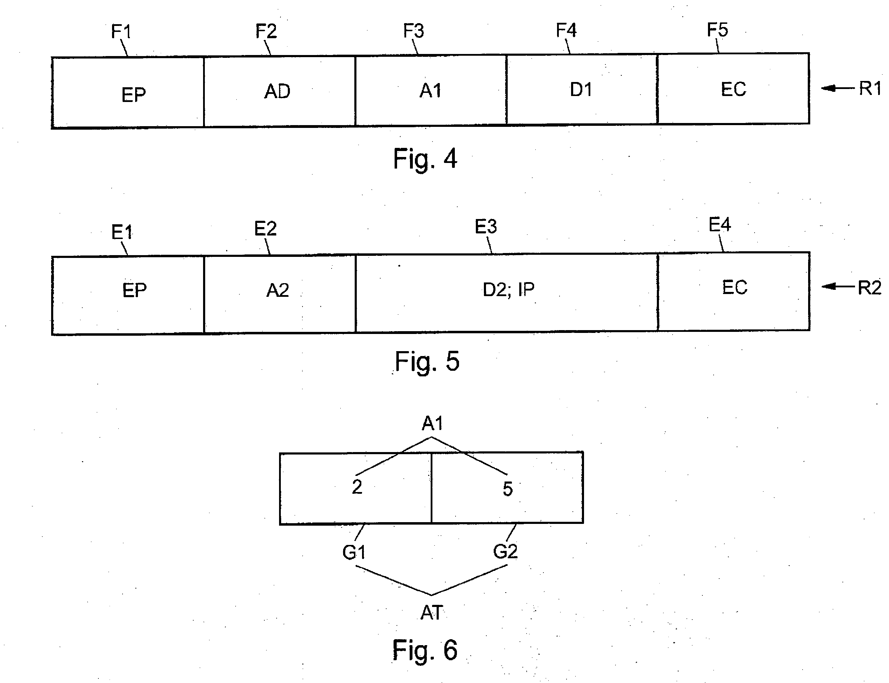

Dabei zeigen die Fig. 4 und 5 schematische Blockschaltbilder von Ausführungsbeispielen eines ersten Rahmens R1 bzw. eines zweiten Rahmens R2 gemäß der Erfindung. Weiter zeigt Fig. 6 ein schematisches Blockschaltbild eines Ausführungsbeispiels eines Adress-Tupels AT des ersten Rahmens R1 gemäß Fig. 4.

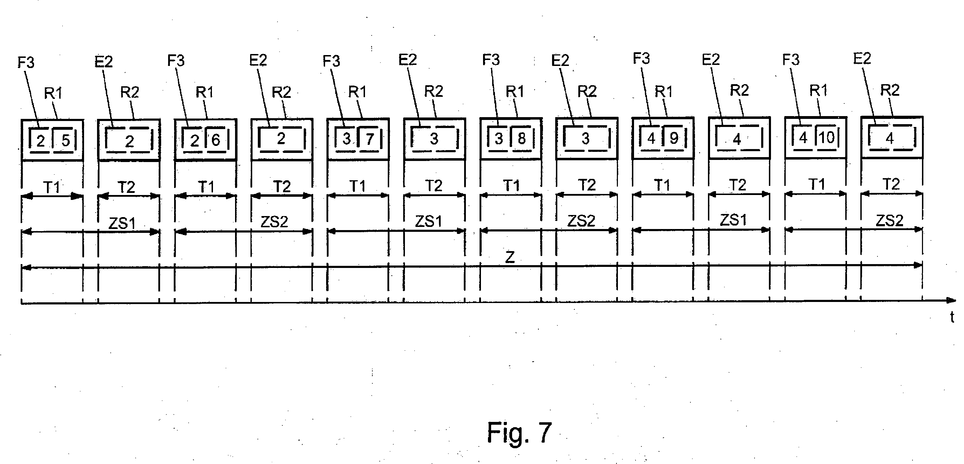

Des Weiteren zeigt Fig. 7 ein schematisches Blockschaltbild eines Ausführungsbeispiels eines zeitlichen Ablaufs der Übertragung der ersten Rahmen R1 und der zweiten Rahmen R2 über den erfindungsgemäßen Bus 11.

Das Ausführungsbeispiel nach Fig. 7 basiert dabei auf dem Ausführungsbeispiel nach Fig. 2 mit den drei Netzwerk-Knoten 2-4. Die beispielhaften Adressen der Adressfelder F3 der ersten Rahmen R1 und der Adressfelder E2 der zweiten Rahmen R2 basieren auf den Bezugszeichen 2-4 der einzelnen Netzwerk-Knoten nach Fig. 2 und der Bezugszeichen 5-10 der einzelnen gekoppelten Endgeräte 5-10 nach Fig. 2. Beispielsweise ist der erste Rahmen R1 des ersten Zeitschlitzes ZS1 für das mit dem Netzwerk-Knoten 2 gekoppelte Endgerät 5 bestimmt.

Details hierzu werden in Bezug auf das erfindungsgemäße Verfahren nach Fig. 3 beschrieben, welches die folgenden Verfahrensschritte S1-S4 aufweist:

### Verfahrensschritt S1:

Mit Bezug auf Fig. 2 werden die Netzwerk-Knoten 2-4 mit einer jeweiligen Anzahl gekoppelter Endgeräte 5-10 mittels eines Busses 11 (Datenbus) in einer Verkettungs-Anordnung gekoppelt. Der Bus 11 hat eine Sendeleitung 12 und eine Empfangsleitung 13.

### Verfahrensschritt S2:

Eine erste Anzahl von gemäß dem bestimmten Netzwerk 1 definierten ersten Rahmen R1, welche jeweils sicherheitsrelevante Daten D1, wie sicherheitsrelevante Steuerdaten, aufweisen, wird bereitgestellt. Die ersten Rahmen R1 sind beispielsweise als CIDS-Rahmen ausgebildet.

Mit Bezug auf Fig. 4 kann der jeweilige erste Rahmen R1 mittels folgender Felder F1-F5 ausgestaltet sein:
- ein erstes Feld F1 mit einer Ethernet-Präambel EP;
- ein zweites Feld F2 mit Audio-Daten AD, insbesondere mit Audio-Broadcasting-Daten;
- ein drittes Feld F3 mit einer Adresse A1, welche zumindest das jeweilige Endgerät 5-10 des jeweiligen Netzwerk-Knotens 2-4 angibt;
- ein viertes Feld F4 mit den sicherheitsrelevanten Daten D1; und
- ein fünftes Feld F5 mit einer Ethernet-Prüfsumme EC, wie beispielsweise einer Ethernet-CRC.

Mit Bezug auf Fig. 6 ist die Adresse A1 des dritten Feldes F3 des ersten Rahmens R1 als ein Adress-Tupel AT ausgebildet, wobei ein erstes Glied G1 des Adress-Tupels AT den jeweiligen Netzwerk-Knoten 2-4 adressiert und ein zweites Glied G2 des Adress-Tupels AT das jeweilige Endgerät 5-10 des jeweiligen Netzwerk-Knotens 2 adressiert. Diese Art der beispielhaften Adressierung ist auch in Fig. 7 - wie oben bereits erläutert - verwendet, so dass das Feld F3 des ersten Rahmens R1 in dem Zeitschlitz ZS1 das Endgerät 5 adressiert, welches mit dem Netzwerk-Knoten 2 gekoppelt ist.

### Verfahrensschritt S3:

Eine zweite Anzahl von gemäß dem bestimmten Netzwerk 1 definierten zweiten Rahmen R2, welche jeweils nicht-sicherheitsrelevante Daten D2, wie beispielsweise IP-Pakete IP aufweisen, wird bereitgestellt.

Der jeweilige zweite Rahmen R2 ist vorzugsweise mit Bezug zu Fig. 5 mittels folgender Felder E1-E4 ausgebildet:
- ein erstes Feld E1 mit einer Ethernet-Präambel EP;
- ein zweites Feld E2 mit einer Adresse A2, welche zumindest einen jeweiligen Netzwerk-Knoten 2-4 angibt;
- ein drittes Feld E3 mit einem IP-Datenpaket IP; und
- ein viertes Feld E4 mit einer Ethernet-Prüfsumme EC, beispielsweise einer Ethernet-CRC.

### Verfahrensschritt S4:

Die bereitgestellten ersten Rahmen R1 und die bereitgestellten zweiten Rahmen R2 werden über den Bus 11 in einer vorbestimmten Abfolge übertragen, wobei ein jeweiliger zeitlicher Abstand ZS1-ZS3 von zwei jeweiligen über die Sendeleitung 12 und von zwei jeweiligen über die Empfangsleitung 13 übertragenen ersten Rahmen R1 in Abhängigkeit einer bestimmten Abtastrate der Audio-Daten durch die gekoppelten Endgeräte 5-10 eingestellt ist und innerhalb des jeweiligen zeitlichen Abstandes ZS1-ZS3 zumindest ein jeweiliger zweiter Rahmen R2 über die Sendeleitung 12 und über die Empfangsleitung 13 übertragen wird.

Vorzugsweise ist der jeweilige zeitliche Abstand ZS1-ZS3 als ein Zeitschlitz ZS1-ZS3 ausgebildet, welcher einer Inversen der Abtastrate der Audio-Daten durch die gekoppelten Endgerät 5-10 entspricht.

Weiter hat der jeweilige Zeitschlitz ZS1-ZS3 einen ersten Teil-Zeitschlitz T1 (siehe Fig. 7) zur Übertragung genau eines ersten Rahmens R1 und einen zweiten Teil-Zeitschlitz T2 (siehe Fig. 7) zur Übertragung zumindest eines zweiten Rahmens R2.

Die jeweiligen ersten Rahmen R1 werden vorzugsweise in dem jeweiligen ersten Teil-Zeitschlitz T1 mittels eines statischen und deterministischen Zeitschlitzverfahrens über die Sendeleitung 12 und die Empfangsleitung 13 des Busses 11 übertragen. Demgegenüber werden die jeweiligen zweiten Rahmen R2 in dem jeweiligen zweiten Teil-Zeitschlitz T2 vorzugsweise mittels eines Best-Effort-Verfahrens übertragen.

Mit Bezug auf Fig. 7 kann innerhalb des jeweiligen vorbestimmten Zeitschlitzes ZS1-ZS3 des Zyklus Z mit einer bestimmten Anzahl von Zeitschlitzen ZS1-ZS3 genau ein bestimmtes Endgerät 5-10 eines ersten Rahmens R1 über die Sendeleitung 12 empfangen und genau einen ersten Rahmen R1 über die Empfangsleitung 13 senden.

Vorzugsweise überträgt die Bus-Steuervorrichtung 14 innerhalb eines Zyklus Z mit der Anzahl N2 von Zeitschlitzen ZS1-ZS3 jeweils zumindest einen ersten Rahmen R1 an das jeweilige, mittels des zweiten Gliedes G2 des Adress-Tupels AT des vierten Feldes F4 des ersten Rahmens R1 adressierte Endgerät 5-10 über die Sendeleitung 12 in einem jeweiligen Zeitschlitz ZS1-ZS3 des Zyklus Z.

Derjenige Netzwerk-Knoten 2-4 ist insbesondere in dem jeweiligen Zeitschlitz ZS1-ZS3 des Zyklus Z berechtigt, nach dem Senden des jeweiligen ersten Rahmens R1 des durch das zweite Glied G2 des Adress-Tupels AT des in dem jeweiligen Zeitschlitz ZS1-ZS3 empfangenen ersten Rahmens R1 adressierten Endgerätes 5-10 einen oder mehrere zweite Rahmen R2 mittels des Best-Effort-Verfahrens über die Empfangsleitung 12 zu senden.

Ferner überträgt die Bus-Steuervorrichtung 14 die jeweiligen zweiten Rahmen R2 in einem Broadcast-Modus über den Bus 11, wobei die gekoppelten Netzwerk-Knoten 2-4 jeweils die zweiten Rahmen R2 empfangen, das IP-Paket IP des zweiten Rahmens R2 extrahieren und das IP-Paket IP an das jeweilige, durch eine IP-Adresse des IP-Paketes IP adressierte Endgerät 5-10 weiterleiten, falls das adressierte Endgerät 5-10 mit dem jeweiligen Netzwerk-Knoten 2-4 gekoppelt ist.

Die Berechtigung des jeweiligen Netzwerk-Knotens 2-4 zum Senden der zweiten Rahmen R2 über die Empfangsleitung 13 innerhalb des jeweiligen Zyklus Z wird vorzugsweise mittels einer Einstellung einer Anzahl an diesen jeweiligen Netzwerk-Knoten 2-4 zu übertragenden ersten Rahmen R1 eingestellt.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

- 1: Netzwerk
- 2-4: Netzwerk-Knoten
- 5-10: Endgerät
- 11: Bus
- 12: Sendeleitung
- 13: Empfangsleitung
- 14: Bus-Steuervorrichtung
- 15-20: Verstärkungseinrichtung
- A1: Adresse
- A2: Adresse
- AD: Audio-Daten
- AT: Adress-Tupel
- D1: sicherheitsrelevante Daten
- D2: nicht-sicherheitsrelevante Daten
- E1: erstes Feld des zweiten Rahmens
- E2: zweites Feld des zweiten Rahmens
- E3: drittes Feld des zweiten Rahmens
- E4: viertes Feld des zweiten Rahmens
- EP: Ethernet-Präambel
- EC: Ethernet-Prüfsonde
- F1: erstes Feld des ersten Rahmens
- F2: zweites Feld des ersten Rahmens
- F3: drittes Feld des ersten Rahmens
- F4: viertes Feld des ersten Rahmens
- F5: fünftes Feld des ersten Rahmens
- G1: erstes Glied des Adress-Tupels
- G2: zweites Glied des Adress-Tupels
- IP: IP-Paket
- S1-S4: Verfahrensschritt
- T1: erster Teil-Zeitschlitz
- T2: zweiter Teil-Zeitschlitz
- Z: Zyklus
- ZS1-ZS3: Zeitschlitz

## Patentansprüche

1. Verfahren zum Übertragen von Daten (R1, R2) über Netzwerk-Knoten (2-4) eines bestimmten Netzwerkes (1), mit den Schritten:
a) Koppeln der Netzwerk-Knoten (2-4) mit einer jeweiligen Anzahl gekoppelter Endgeräte (5-10) mittels eines Busses (11) mit einer Sendeleitung (12) und einer Empfangsleitung (13) in einer Verkettungs-Anordnung;
b) Bereitstellen einer ersten Anzahl von gemäß dem bestimmten Netzwerk (1) definierten ersten Rahmen (R1), welche jeweils sicherheitsrelevante Daten (D1) aufweisen;
c) Bereitstellen einer zweiten Anzahl von gemäß dem bestimmten Netzwerk (1) definierten zweiten Rahmen (R2), welche jeweils nicht-sicherheitsrelevante Daten (D2) aufweisen; und
d) Übertragen der bereitgestellten ersten Rahmen (R1) und der bereitgestellten zweiten Rahmen (R2) über den Bus (11) in einer vorbestimmten Abfolge, wobei ein jeweiliger zeitlicher Abstand (ZS1-ZS3) von zwei jeweiligen über die Sendeleitung (12) und von zwei jeweiligen über die Empfangsleitung (13) übertragenen ersten Rahmen (R1) in Abhängigkeit einer bestimmten Abtastrate von Audio-Daten durch die gekoppelten Endgeräte (5-10) eingestellt ist und innerhalb des jeweiligen zeitlichen Abstandes (ZS1-ZS3) zumindest ein jeweiliger zweiter Rahmen (R2) über die Sendeleitung (12) und über die Empfangsleitung (13) übertragen wird.

2. Verfahren nach Anspruch 1,
**dadurch gekennzeichnet,**
**dass** der jeweilige zeitliche Abstand (ZS1-ZS3) als ein Zeitschlitz ausgebildet wird, welcher einer Inversen der Abtastrate der Audio-Daten durch die gekoppelten Endgeräte (5-10) entspricht.

3. Verfahren nach Anspruch 2,
**dadurch gekennzeichnet,**
**dass** der jeweilige Zeitschlitz (ZS1-ZS3) einen ersten Teil-Zeitschlitz (T1) zur Übertragung genau eines ersten Rahmens (R1) und einen zweiten Teil-Zeitschlitz (T2) zur Übertragung zumindest eines zweiten Rahmens (R2) umfasst.

4. Verfahren nach Anspruch 1, 2 oder 3,
**dadurch gekennzeichnet,**
**dass** eine Bus-Steuervorrichtung (14) und die Netzwerk-Knoten (2-4) mittels des Busses (11) in der Verkettung-Anordnung gekoppelt werden, wobei die Netzwerk-Knoten (2-4) mittels der Sendeleitung (12) des Busses (11) und mittels der Empfangsleitung (13) des Busses (11) mit der Bus-Steuervorrichtung (14) gekoppelt sind, wobei die Sendeleitung (12) und die Empfangsleitung (13) durch den jeweiligen Netzwerk-Knoten (2-4) durchgeschleift werden.

5. Verfahren nach Ansprüche 3 oder 4,
**dadurch gekennzeichnet,**
**dass** die jeweiligen ersten Rahmen (R1) in den jeweiligen ersten Teil-Zeitschlitz (T1) mittels eines statischen und deterministischen Zeitschlitzverfahrens über die Sendeleitung (12) und die Empfangsleitung (13) des Busses (11) übertragen werden.

6. Verfahren nach Anspruch 5,
**dadurch gekennzeichnet,**
**dass** die mittels der Netzwerk-Knoten (2-4) gekoppelten Endgeräte (5-10) mittels des statischen und deterministischen Zeitschlitzverfahrens derart gesteuert werden, dass innerhalb des jeweiligen vorbestimmten Zeitschlitzes (ZS1-ZS3) eines Zyklus (Z) mit einer bestimmten Anzahl von Zeitschlitzen (ZS1-ZS3) genau ein bestimmtes Endgerät (5-10) einen ersten Rahmen (R1) über die Sendeleitung (12) empfangen kann und genau einen ersten Rahmen (R1) über die Empfangsleitung (13) senden kann.

7. Verfahren nach Anspruch 1 oder einem der Ansprüche 2 bis 6,
**dadurch gekennzeichnet,**
**dass** die zweiten Rahmen (R2) mittels eines Best-Effort-Verfahrens übertragen werden.

8. Verfahren nach Anspruch 5, 6 oder 7,
**dadurch gekennzeichnet,**
**dass** die mittels des Busses (11) gekoppelten Netzwerk-Knoten (2-4) mittels des Zeitschlitzverfahrens derart gesteuert werden, dass innerhalb eines jeweiligen vorbestimmten Zeitschlitzes (ZS1-ZS3) genau ein bestimmter Netzwerk-Knoten (2-4) genau einen ersten Rahmen (R1) für ein gekoppeltes Endgerät (5-10) und zumindest einen zweiten Rahmen (R2) über die Sendeleitung (12) empfangen kann und genau einen ersten Rahmen (R1) eines gekoppelten Endgerätes (5-10) und zumindest einen zweiten Rahmen (R2) über die Empfangsleitung (13) senden kann.

9. Verfahren nach einem der Ansprüche 1 bis 8,
**dadurch gekennzeichnet,**
**dass** die ersten Rahmen (R1) und die zweiten Rahmen (R2) als Ethernet-Rahmen ausgebildet werden, wobei das bestimmte Netzwerk (1) vorzugsweise als Ethernet-Netzwerk ausgebildet wird.

10. Verfahren nach einem der Ansprüche 1 bis 9,
**dadurch gekennzeichnet,**
**dass** ein jeweiliger erster Rahmen (R2) aus folgenden Feldern ausgebildet wird:
- ein erstes Feld (F1) mit einer Ethernet-Präambel (EP) ;
- ein zweites Feld (F2) mit Audio-Daten (AD), insbesondere mit Audio-Broadcast-Daten;
- ein drittes Feld (F3) mit einer Adresse (A1), welche zumindest das jeweilige Endgerät (5-10) des jeweiligen Netzwerk-Knotens (2-4) angibt;
- ein viertes Feld (F4) mit den sicherheitsrelevanten Daten (D1); und
- ein fünftes Feld (F5) mit einer Ethernet-Prüfsumme (EC).

11. Verfahren nach einem der Ansprüche 1 bis 10,
**dadurch gekennzeichnet,**
**dass** ein jeweiliger zweiter Rahmen (R2) aus folgenden Feldern ausgebildet wird:
- ein erstes Feld (E1) mit einer Ethernet-Präambel (EP);
- ein zweites Feld (E2) mit einer Adresse (A2), welche zumindest einen jeweiligen Netzwerk-Knoten (2-4) angibt;
- ein drittes Feld (E3) mit einem IP-Datenpaket (IP); und
- ein viertes Feld (E4) mit einer Ethernet-Prüfsumme (EC).

12. Verfahren nach Anspruch 10 oder 11,
**dadurch gekennzeichnet,**
**dass** die Adresse (A1) des dritten Feldes (F3) des ersten Rahmens (R1) als ein Adress-Tupel (AT) ausgebildet wird, wobei ein erstes Glied (G1) des Adress-Tupels (AT) den jeweiligen Netzwerk-Knoten (2-4) adressiert und ein zweites Glied (G2) des Adress-Tupels (AT) das jeweilige Endgerät (5-10) des jeweiligen Netzwerk-Knotens (2-4) adressiert.

13. Verfahren nach Anspruch 12
**dadurch gekennzeichnet,**
**dass** die Bus-Steuervorrichtung (14) innerhalb eines Zyklus (Z) mit der Anzahl N2 von Zeitschlitzen (ZS1-ZS3) jeweils zumindest einen ersten Rahmen (R1) an das jeweilige, mittels des zweiten Gliedes (G2) des Adress-Tupels (AT) des vierten Feldes (F4) des ersten Rahmens (R1) adressierte Endgerät (5-10) über die Sendeleitung (12) in einem jeweiligen Zeitschlitz (ZS1-ZS3) des Zyklus (Z) überträgt.

14. Vorrichtung zum Übertragen von Daten (R1, R2) über Netzwerk-Knoten (2-4) eines bestimmten Netzwerkes (1), mit:
a) zumindest zwei Netzwerk-Knoten (2-4) mit einer jeweiligen Anzahl gekoppelter Endgeräte (5-10);
b) einem Bus (11) mit einer Sendeleitung (12) und einer Empfangsleitung (13), welcher die Netzwerk-Knoten (2-4) in einer Verkettungs-Anordnung koppelt;
c) einer mit dem Bus (11) gekoppelten Bus-Steuervorrichtung (14), welche dazu eingerichtet ist, gemäß dem bestimmten Netzwerk (1) definierte erste Rahmen (R1) mit sicherheitsrelevanten Daten (D1) und zweiten (R2) Rahmen mit nicht-sicherheitsrelevanten Daten (D2) in einer vorbestimmten Abfolge über den Bus (11) zu übertragen, wobei ein jeweiliger zeitlicher Abstand (ZS1-ZS3) von zwei jeweiligen über die Sendeleitung (12) und von zwei jeweiligen über die Empfangsleitung (13) übertragenen ersten Rahmen (R1) in Abhängigkeit einer bestimmten Abtastrate von Audio-Daten durch die gekoppelten Endgeräte (5-10) eingestellt ist und innerhalb des jeweiligen zeitlichen Abstandes (ZS1-ZS3) zumindest ein jeweiliger zweiter Rahmen (R2) über die Sendeleitung (12) und über die Empfangsleitung (13) übertragen wird.

15. Vorrichtung zum Übertragen von Daten (DS, R1, R2) und Energie (VS) über Netzwerk-Knoten (2-4) eines bestimmten Netzwerkes (1), mit:
a) zumindest zwei Netzwerk-Knoten (2-4) mit einer jeweiligen Anzahl gekoppelter Endgeräte (5-10);
b) einem Bus (11) mit einer Sendeleitung (12) und einer Empfangsleitung (13), welcher die Netzwerk-Knoten (2-4) in einer Verkettungs-Anordnung koppelt;
c) einer mit dem Bus (11) gekoppelten Bus-Steuervorrichtung (14), welche aufweist:
ein erstes Mittel (21), welches dazu eingerichtet ist,
eine Übertragung von gemäß dem bestimmten Netzwerk (1) definierten ersten Rahmen (R1) mit sicherheitsrelevanten Daten (D1) und zweiten Rahmen (R2) mit nicht-sicherheitsrelevanten Daten (D2) in einer vorbestimmten Abfolge als Daten-Spannungssignale (DS) über den Bus (11) zu steuern, dabei einen jeweiligen zeitlichen Abstand (ZS1-ZS2) von zwei jeweiligen über die Sendeleitung (12) und von zwei jeweiligen über die Empfangsleitung (13) übertragen ersten Rahmen (R1) in Abhängigkeit einer bestimmten Abtastrate von Audio-Daten durch die gekoppelten Endgeräte (5-10) einzustellen und eine Übertragung zumindest eines jeweiligen zweiten Rahmens (R2) über die Sendeleitung (12) und über die Empfangsleitung (13) innerhalb des jeweiligen zeitlichen Abstand (ZS1-ZS2) zu steuern, und
ein zweites Mittel (22), welches dazu eingerichtet ist, die
Daten-Spannungssignale (DS) zumindest auf der Sendeleitung (12) oder auf der Empfangsleitung (13) mit zur Spannungsversorgung zumindest eines Netzwerk-Knotens (2-5) geeigneten Versorgungs-Spannungssignalen (VS) zu beaufschlagen.

## Claims

1. Method for transmitting data (R1, R2) via network nodes (2-4) of a specific network (1), comprising the steps of:
a) coupling the network nodes (2-4) to a respective number of coupled end devices (5-10) by means of a bus (11) having a transmission line (12) and a receiving line (13) in a linking arrangement;
b) providing a first number of first frames (R1) which are defined in accordance with the specific network (1) and each comprise safety-related data (D1);
c) providing a second number of second frames (R2) which are defined in accordance with the specific network (1) and each comprise non-safety-related data (D2); and
d) transmitting the provided first frames (R1) and the provided second frames (R2) via the bus (11) in a predetermined sequence, wherein a respective time interval (ZS1-ZS3) between two respective first frames (R1) transmitted via the transmission line (12) and two respective first frames (R1) transmitted via the receiving line (13) is set in dependence upon a specific sampling rate of audio data by the coupled end devices (5-10), and within the respective time interval (ZS1-ZS3) at least one respective second frame (R2) is transmitted via the transmission line (12) and via the receiving line (13).

2. Method as claimed in claim 1, **characterised in that** the respective time interval (ZS1-ZS3) is formed as a time slot which corresponds to an inverse of the sampling rate of the audio data by the coupled end devices (5-10).

3. Method as claimed in claim 2, **characterised in that** the respective time slot (ZS1-ZS3) comprises a first partial time slot (T1) for transmitting exactly one first frame (R1) and a second partial time slot (T2) for transmitting at least one second frame (R2).

4. Method as claimed in claim 1, 2 or 3, **characterised in that** a bus control device (14) and the network nodes (2-4) are coupled in the linking arrangement by means of the bus (11), wherein the network nodes (2-4) are coupled to the bus control device (14) by means of the transmission line (12) of the bus (11) and by means of the receiving line (13) of the bus (11), wherein the transmission line (12) and the receiving line (13) are looped through the respective network nodes (2-4).

5. Method as claimed in claim 3 or 4, **characterised in that** the respective first frames (R1) are transmitted into the respective first partial time slot (T1) by means of a static and deterministic time slot method via the transmission line (12) and the receiving line (13) of the bus (11).

6. Method as claimed in claim 5, **characterised in that** the end devices (5-10) coupled by means of the network nodes (2-4) are controlled by means of the static and deterministic time slot method such that within the respective predetermined time slot (ZS1-ZS3) of a cycle (Z) with a specific number of time slots (ZS1-ZS3), exactly one specific end device (5-10) can receive a first frame (R1) via the transmission line (12) and can transmit exactly one first frame (R1) via the receiving line (13).

7. Method as claimed in claim 1 or any one of claims 2 to 6, **characterised in that** the second frames (R2) are transmitted by means of a best-effort method.

8. Method as claimed in claim 5, 6 or 7, **characterised in that** the network nodes (2-4) coupled by means of the bus (11) are controlled by means of the time slot method such that within a respective predetermined time slot (ZS1-ZS3) exactly one specific network node (2-4) can receive exactly one first frame (R1) for a coupled end device (5-10) and at least one second frame (R2) via the transmission line (12) and can transmit exactly one first frame (R1) of a coupled end device (5-10) and at least one second frame (R2) via the receiving line (13).

9. Method as claimed in any one of claims 1 to 8, **characterised in that** the first frames (R1) and the second frames (R2) are formed as Ethernet frames, wherein the specific network (1) is preferably formed as an Ethernet network.

10. Method as claimed in any one of claims 1 to 9,
**characterised in that** a respective first frame (R2) is formed from the following fields:
- a first field (F1) with an Ethernet preamble (EP);
- a second field (F2) with audio data (AD), in particular with audio broadcast data;
- a third field (F3) with an address (A1) which indicates at least the respective end device (5-10) of the respective network node (2-4);
- a fourth field (F4) with the safety-related data (D1); and
- a fifth field (F5) with an Ethernet checksum (EC).

11. Method as claimed in any one of claims 1 to 10, **characterised in that** a respective second frame (R2) is formed from the following fields:
- a first field (E1) with an Ethernet preamble (EP);
- a second field (E2) with an address (A2), which indicates at least one respective network node (2-4) ;
- a third field (E3) with an IP data packet (IP); and
- a fourth field (E4) with an Ethernet checksum (EC).

12. Method as claimed in claim 10 or 11, **characterised in that** the address (A1) of the third field (F3) of the first frame (R1) is formed as an address tuple (AT), wherein a first member (G1) of the address tuple (AT) addresses the respective network node (2-4), and a second member (G2) of the address tuple (AT) addresses the respective end device (5-10) of the respective network node (2-4).

13. Method as claimed in claim 12, **characterised in that** the bus control device (14) within a cycle (Z) with the number N2 of time slots (ZS1-ZS3) transmits in each case at least one first frame (R1) to the respective end device (5-10), which is addressed by means of the second member (G2) of the address tuple (AT) of the fourth field (F4) of the first frame (R1), via the transmission line (12) in a respective time slot (ZS1-ZS3) of the cycle (Z).

14. Device for transmitting data (R1, R2) via network nodes (2-4) of a specific network (1), comprising:
a) at least two network nodes (2-4) having a respective number of coupled end devices (5-10);
b) a bus (11) with a transmission line (12) and a receiving line (13), which bus couples the network nodes (2-4) in a linking arrangement;
c) a bus control device (14) coupled to the bus (11) and arranged to transmit first frames (R1) comprising safety-related data (D1) and second frames (R2) comprising non-safety-related data (D2), which frames are defined in accordance with the specific network (1), in a predetermined sequence via the bus (11), wherein a respective time interval (ZS1-ZS3) between two respective first frames (R1) transmitted via the transmission line (12) and two respective first frames (R1) transmitted via the receiving line (13) is set in dependence upon a specific sampling rate of audio data by the coupled end devices (5-10), and within the respective time interval (ZS1-ZS3) at least one respective second frame (R2) is transmitted via the transmission line (12) and via the receiving line (13).

15. Device for transmitting data (DS, R1, R2) and energy (VS) via network nodes (2-4) of a specific network (1), having:
a) at least two network nodes (2-4) with a respective number of coupled end devices (5-10);
b) a bus (11) with a transmission line (12) and a receiving line (13), which bus couples the network nodes (2-4) in a linking arrangement;
c) a bus control device (14) coupled to the bus (11) and comprising:
• a first means (21) which is arranged to control a transmission of first frames (R1) comprising safety-related data (D1) and second frames (R2) comprising non-safety-related data (D2), which frames are defined in accordance with the specific network (1), in a predetermined sequence as data voltage signals (DS) via the bus (11), and in so doing to set a respective time interval (ZS1-ZS2) between two respective first frames (R1) transmitted via the transmission line (12) and two respective first frames (R1) transmitted via the receiving line (13) in dependence upon a specific sampling rate of audio data by the coupled end devices (5-10), and to control a transmission of at least one respective second frame (R2) via the transmission line (12) and via the receiving line (13) within the respective time interval (ZS1-ZS2), and
• a second means (22), which is arranged to load the data voltage signals (DS) at least on the transmission line (12) or on the receiving line (13) with supply voltage signals (VS) suitable for the voltage supply of at least one network node (2-5).

## Revendications

1. Procédé de transmission de données (R1, R2) via des noeuds de réseau (2-4) d'un réseau (1) déterminé, comportant les étapes de :
a) couplage des noeuds de réseau (2-4) avec un nombre de terminaux (5-10) couplés, au moyen d'un bus (11) comprenant une ligne d'émission (12) et une ligne de réception (13) dans un agencement chaîné ;
b) mise en place d'un premier nombre de premières trames (R1) définies en fonction du réseau (1) déterminé, présentant chacune des données (D1) intéressant la sécurité ;
c) mise en place d'un second nombre de secondes trames (R2) définies en fonction du second réseau (1) déterminé, présentant chacune des données (D2) n'intéressant pas la sécurité ; et
d) transmission des premières trames (R1) mises en place et des secondes trames (R2) mises en place sur le bus (11) dans un ordre prédéterminé, un écart de temps (ZS1-ZS3) respectif de deux premières trames (R1) respectives transmises via la ligne d'émission (12) et de deux premières trames (R1) respectives transmises via la ligne de réception (13) étant défini en fonction d'un rythme de détection déterminé de données audio par les terminaux (5-10) couplés et, à l'intérieur de l'écart de temps (ZS1-ZS3) respectif, au moins une seconde trame (R2) respective étant transmise via la ligne d'émission (12) et via la ligne de réception (13).

2. Procédé selon la revendication 1, **caractérisé par le fait que** l'écart de temps (ZS1-ZS3) respectif est réalisé sous forme d'intervalle temporel, qui correspond à un inverse du rythme de détection des données audio par les terminaux (5-10) couplés.

3. Procédé selon la revendication 2, **caractérisé par le fait que** l'intervalle temporel (ZS1-ZS3) respectif comprend un premier intervalle temporel partiel (T1) pour la transmission d'exactement une première trame (R1) et un second intervalle temporel partiel (T2) pour la transmission d'au moins une seconde trame (R2).

4. Procédé selon la revendication 1, 2 ou 3, **caractérisé par le fait qu'**un dispositif de commande de bus (14) et les noeuds de réseau (2-4) sont couplés au moyen du bus (11) en agencement chaîné, les noeuds de réseau (2-4) étant couplés au dispositif de commande de bus (14) au moyen de la ligne d'émission (12) du bus (11) et au moyen de la ligne de réception (13) du bus (11), la ligne d'émission (12) et la ligne de réception (13) passant dans le noeud de réseau (2-4) respectif.

5. Procédé selon la revendication 3 ou 4, **caractérisé par le fait que** les premières trames (R1) respectives sont transmises dans le premier intervalle temporel partiel (T1) respectif au moyen d'un intervalle temporel statique et déterministe via la ligne d'émission (12) et la ligne d'émission (13) du bus (11).

6. Procédé selon la revendication 5, **caractérisé par le fait que** les terminaux (5-10) couplés au moyen des noeuds de réseau (2-4) sont pilotés au moyen du procédé des intervalles temporels statiques et déterministes de telle sorte que, à l'intérieur de l'intervalle temporel (ZS1-ZS3) respectif prédéterminé d'un cycle (Z) avec un nombre défini d'intervalles temporels (ZS1-ZS3), exactement un terminal (5-10) déterminé peut recevoir une première trame (R1) via la ligne d'émission (12) et peut envoyer exactement une première trame (R1) via la ligne de réception (13).

7. Procédé selon la revendication 1 ou une des revendications 2 à 6, **caractérisé par le fait que** les secondes trames (R2) sont transmises au moyen d'un principe du meilleur effort.

8. Procédé selon la revendication 5, 6 ou 7, **caractérisé par le fait que** les noeuds de réseau (2-4) couplés au moyen du bus (11) sont pilotés au moyen du procédé des intervalles temporels de telle sorte que, à l'intérieur d'un intervalle temporel (ZS1-ZS3) respectif prédéterminé, exactement un noeud de réseau (2-4) déterminé peut recevoir une première trame (R1) pour une terminal (5-10) couplé et au moins une seconde trame (R2) via la ligne d'émission (12) et peut envoyer exactement une première trame (R1) d'un terminal (5-10) couplé et au moins une seconde trame (R2) via la ligne de réception (13).

9. Procédé selon l'une des revendication 1 à 8, **caractérisé par le fait que** les premières trames (R1) et les secondes trames (R2) sont réalisées sous forme de trame Ethernet, le réseau (1) déterminé étant réalisé préférentiellement sous forme de réseau Ethernet.

10. Procédé selon l'une des revendication 1 à 9, **caractérisé par le fait qu'**une première trame (R1) respective est réalisée sous la forme des champs suivants :
- un premier champ (F1) avec un préambule Ethernet (EP) ;
- un second champ (F2) avec des données audio (AD), en particulier avec des données de diffusion audio ;
- un troisième champ (F1) avec une adresse (A1), qui indique au moins le terminal (5-10) respectif du noeud de réseau (2-4) respectif ;
- un quatrième champ (F4) avec des données (D1) intéressant la sécurité ; et
- un cinquième champ (F5) avec une somme de contrôle Ethernet (EC).

11. Procédé selon l'une des revendication 1 à 10, **caractérisé par le fait qu'**une seconde trame (R2) respective est réalisée sous la forme des champs suivants :
- un premier champ (E1) avec un préambule Ethernet (EP) ;
- un second champ (E2) avec une adresse (A2), qui indique au moins un noeud de réseau (2-4) respectif ;
- un troisième champ (E3) avec un paquet de données IP (IP) ; et
- un quatrième champ (E4) avec une somme de contrôle Ethernet (EC).

12. Procédé selon la revendication 10 ou 11, **caractérisé par le fait que** l'adresse (A1) du troisième champ (F3) de la première trame (R1) est réalisée sous forme de table d'adresses (AT), un premier élément (G1) de table d'adresses (AT) indiquant le noeud de réseau (2-4) respectif et un second élément (G2) de table d'adresses (AT) adressant le terminal (5-10) respectif du noeud de réseau (2-4) respectif.

13. Procédé selon la revendication 12, **caractérisé par le fait que** le dispositif de commande de bus (14) à l'intérieur d'un cycle (Z) avec le nombre N2 d'intervalles temporels (ZS1-ZS3) transmet respectivement au moins une première trame (R1) au terminal (5-10) adressé respectif au moyen du second élément (G2) de la table d'adresses (AT) du quatrième champ (F4) de la première trame (R1) via la ligne d'émission (12) dans un intervalle temporel (ZS1-ZS3) respectif du cycle (Z).

14. Dispositif de transmission de données (R1, R2) via des noeuds de réseau (2-4) d'un réseau (1) déterminé, avec :
a) au moins deux noeuds de réseau (2-4) avec un nombre respectif de terminaux (5-10) couplés ;
b) un bus (11) avec une ligne d'émission (12) et une ligne de réception (13), qui couple les noeuds de réseau (2-4) dans un agencement chaîné ;
c) un dispositif de commande de bus (14) couplé au bus (11), qui est agencé pour transmettre des premières trames (R1) définies en fonction du réseau (1) déterminé avec des données intéressant la sécurité (D1) et des secondes trames (R2) qui n'intéressent pas la sécurité (D2) dans un ordre prédéterminé via le bus (11), un écart de temps (ZS1-ZS3) respectif de deux premières trames (R1) respectives transmises via la ligne d'émission (12) et de deux premières trames (R1) respectives transmises via la ligne de réception (13) étant défini en fonction d'un rythme de détection déterminé de données audio par les terminaux (5-10) couplés et, à l'intérieur de l'écart de temps (ZS1-ZS3) respectif, au moins une seconde trame (R2) respective étant transmise via la ligne d'émission (12) et via la ligne de réception (13) .

15. Dispositif de transmission de données (DS, R1, R2) et d'énergie (VS) via des noeuds de réseau (2-4) d'un réseau (1) déterminé, comportant :
a) au moins deux noeuds de réseau (2-4) avec un nombre respectif de terminaux (5-10) couplés ;
b) un bus (11) avec une ligne d'émission (12) et une ligne de réception (13), qui couple les noeuds de réseau (2-4) dans un agencement chaîné ;
c) un dispositif de commande de bus (14) couplé au bus (11), qui présente :
• un premier moyen (21), qui est agencé pour commander via le bus (11) une transmission de premières trames (R1) définies en fonction du réseau (1) déterminé avec des données intéressant la sécurité (D1) et de secondes trames (R2) n'intéressant pas la sécurité (D2) dans un ordre prédéterminé en tant que signaux de tension de données (DS), en réglant un écart de temps (ZS1-ZS2) respectif de deux premières trames (R1) respectives transmises via la ligne d'émission (12) et de deux premières trames (R1) respectives transmises via la ligne de réception (13) en fonction d'un rythme de détection défini de données audio par les terminaux (5-10) couplés et, commander une transmission d'au moins une seconde trame (R2) respective via la ligne d'émission (12) et via la ligne de réception (13) à l'intérieur de l'écart de temps (ZS1-ZS2) respectif, et
• un second moyen (22), qui est agencé pour appliquer les signaux de tension de données (DS) au moins sur la ligne d'émission (12) ou sur la ligne de réception (13) avec des signaux de tension d'alimentation (VS) adaptés pour l'alimentation en tension d'au moins un noeud de réseau (2-5).
